# EUROPEAN PATENT SPECIFICATION

(11) **EP 1 535 702 B1**
(45) Date of publication and mention of the grant of the patent: **03.08.2011**
(21) Application number: 03792638.3
(22) Date of filing: 25.07.2003
(51) Int. Cl.: B25B 1/10, B25B 1/14, B23Q 3/06

(54) **CLAMP DEVICE**
KLEMMVORRICHTUNG
DISPOSITIF DE SERRAGE

(30) Priority: 25.07.2002 JP 2002217157
(43) Date of publication of application: 01.06.2005
(73) Proprietor: NISHIMURA PRESS KOUGYOUSHO CO., LTD., Seki-shi, Gifu 501-3916 (JP)
(72) Inventor: NISHIMURA, Eikichi, Seki-shi, Gifu 501-3916 (JP); KUNII, Takeshi, Gifu-shi, Gifu 501-3125 (JP)
(74) Representative: Fritzon, Rolf
(86) International application number: PCT/JP2003/009464
(87) International publication number: WO 2004/018154

(56) References cited:
- DE-U1- 7 605 793
- JP-A- 9 290 338
- JP-A- 50 110 191
- JP-U- 3 086 457
- JP-U- 02 015 238
- JP-Y2- 5 024 423
- US-A- 4 335 873
- US-A- 4 828 240
- US-A- 5 924 685

## Description

### TECHNICAL FIELD

The present invention relates to a clamping device for clamping a workpiece at a predetermined position, which device is installed on a clamping jig for an assembly line or a welding operation of several types of products, or installed on the upper surface of a table supporting a workpiece for a machine tool.

### BACKGROUND ART

In the prior art as per the preamble of claim 1, a toggle clamp disclosed in Japanese Laid-Open Utility Model Publication 63-136838 has been proposed. The toggle clamp of the above publication has a tightening force adjustment mechanism, which includes a base bracket, a workpiece pressing arm, and a handle. The workpiece pressing arm and the handle are designed to operate in cooperation via a toggle mechanism. The workpiece pressing arm is formed of a pair of strip-shaped arm plates to sandwich a vertical pin receiver of the base bracket. A slit is formed in each arm plate to extend in the longitudinal direction in parallel to the lower rim of the arm plate.

DE 76 05 793 illustrates another prior art clamp device.

The slits receive the ends of a plate nut so that the plate nut slides freely. The plate nut includes rotation restricting steps, each of which is engaged with the rim of the corresponding slit. Furthermore, a U-shaped washer fitted to the lower rims of the arm plates has a central hole through which an adjustment bolt is inserted and screwed to the plate nut so that a lock nut on the adjustment bolt is tightened to the washer.

The tightening force adjustment mechanism of the toggle clamp adjusts the clamp position by moving the plate nut along the slits. However, since the adjustment bolt is fixed by the lock nut after adjusting the height of the adjustment bolt, the pressing force cannot be adjusted easily while clamping the workpiece.

That is, the height of the adjustment bolt needs to be adjusted by loosening the lock nut in a narrow space surrounded by the base bracket, the arm plates, and the workpiece. Thus, adjusting the pressing force applied to the workpiece is very troublesome.

Accordingly, it is an objective of the present invention to provide a clamping device that solves the problems of the prior art and finely and easily adjusts the pressing force while actually clamping a member that is to be clamped. This is acheived by the clamping apparatus of claim 1.

Therefore, the pressure applied to the member to be clamped is appropriately adjusted by the manipulation portion while the member to be clamped is actually clamped.

### BRIEF DESCRIPTION OF THE DRAWINGS

Fig. 1 is a front view illustrating a toggle clamp of the present invention clamping a workpiece;
Fig. 2 is a plan view illustrating the toggle clamp of Fig. 1;
Fig. 3 is an enlarged cross-sectional view taken along line 3-3 of Fig. 1;
Fig. 4 is a front view illustrating a toggle clamp according to a modified embodiment of the present invention;
Fig. 5 is a longitudinal cross-sectional view illustrating the toggle clamp of Fig. 4;
Fig. 6 is a front view illustrating a substantial part of the toggle clamp according to a modified embodiment of the present invention;
Fig. 7 is a longitudinal cross-sectional view illustrating the toggle clamp of Fig. 6;
Fig. 8 is a longitudinal cross-sectional view illustrating a substantial part of the toggle clamp according to a modified embodiment of the present invention;
Fig. 9 is a longitudinal cross-sectional view illustrating a substantial part of the toggle clamp ; and
Fig. 10 is a longitudinal cross-sectional view illustrating a substantial part of the toggle clamp.

### BEST MODE FOR CARRYING OUT THE INVENTION

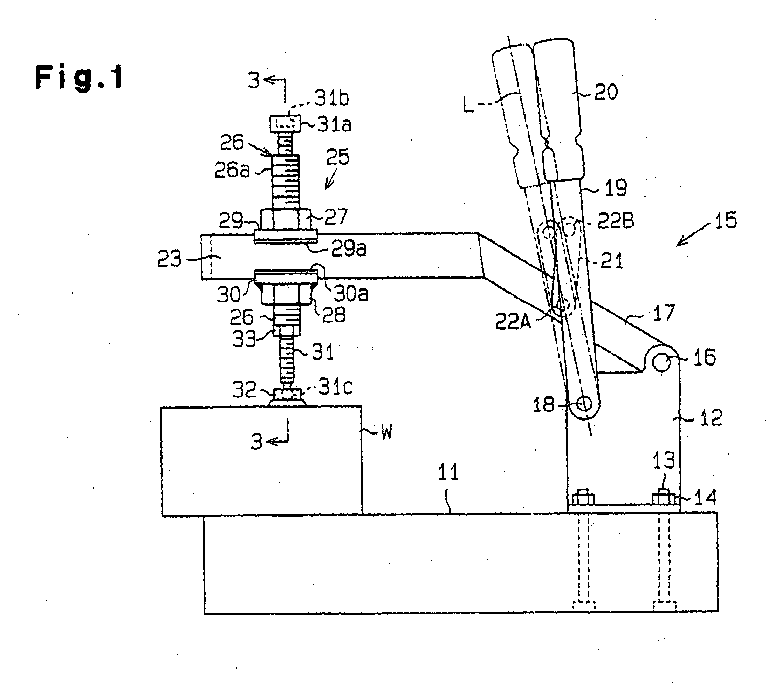

A toggle clamp according to one embodiment of the present invention will now be described with reference to Figs. 1 to 3.

As shown in Fig. 1, a pair of left and right mounting members, which are fixed mounting plates 12 in this embodiment, are arranged on an upper surface of a support member, which is a base bracket 11 in this embodiment. The mounting plates 12 are fixed to a predetermined position with four bolts 13, which are inserted through the base bracket 11 from below and upward, and nuts 14 screwed to the bolts 13. A pressure applying mechanism, which is a toggle mechanism 15 in this embodiment, is attached to upper ends of the mounting plates 12.

A clamp arm 17 extends substantially horizontally. The proximal end of the clamp arm 17 is rotatably coupled between the upper ends of the mounting plates 12 with a coupling pin 16. Therefore, the distal end of the clamp arm 17 can rotate back and forth in the vertical direction. A pair of manipulation levers 19 extends in a substantially vertical direction. The lower ends of the manipulation levers 19 are coupled to the outer surfaces of the upper end of the mounting plates 12 with a coupling pin 18 so that the manipulation levers 19 rotate forward and rearward and the direction of rotation alternates. A resin grip 20 is formed at the upper ends of the pair of manipulation levers 19 through insert molding. A toggle link 21 is located between the intermediate portion of the clamp arm 17 and the intermediate portion of each manipulation lever 19. Each toggle link 21 is coupled to the clamp arm 17 and the corresponding manipulation lever 19 with coupling pins 22A and 22B.

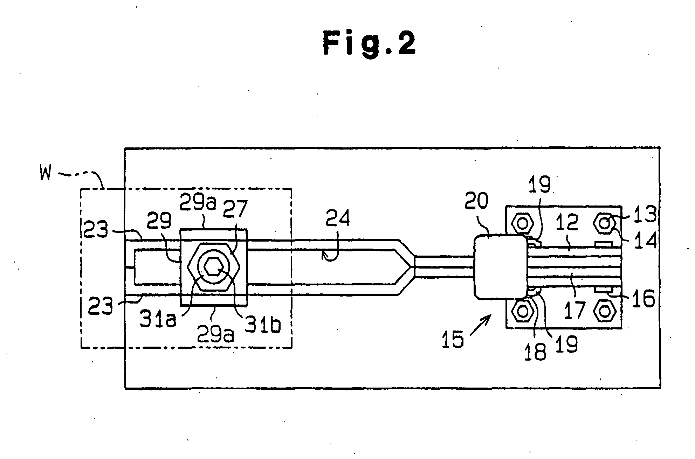

The clamp arm 17 is branched into a pair of left and right arm pieces 23 as shown in Fig. 2. A guide groove 24 is formed between the arm pieces 23 and perforates the arm pieces 23 in the vertical direction. A clamp bolt unit 25 is attached to the clamp arm 17 using the arm pieces 23 and the guide groove 24. The clamp bolt unit 25 includes a threaded cylinder 26, which is vertically inserted through the guide groove 24. A first lock nut 27 and a second lock nut 28 are screwed to an external thread portion 26a formed on the outer circumferential surface of the threaded cylinder 26.

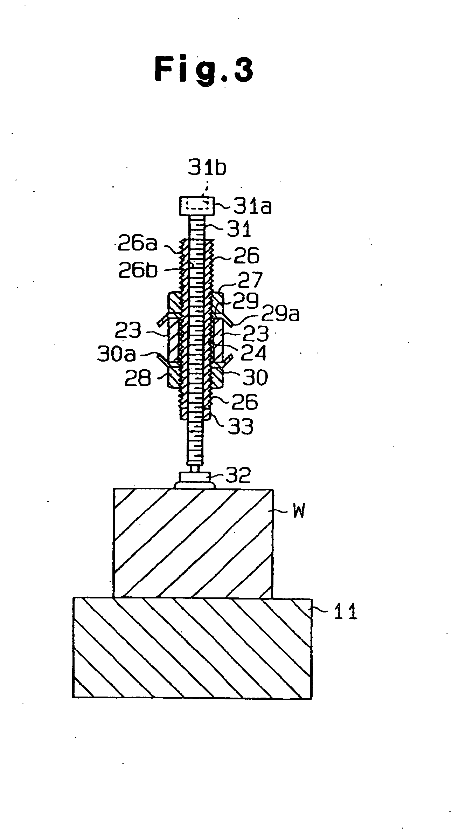

An upper washer 29 is located between the upper surfaces of the arm pieces 23 and the lower surface of the first lock nut 27. A lower washer 30 is located between the lower surfaces of the arm pieces 23 and the upper surface of the second lock nut 28. The lower washer 30 and the second lock nut 28 are fixed by welding. As shown in Fig. 3, the left and right sides of each of the upper washer 29 and the lower washer 30 are bent to form a rotation restricting rib 29a or 30a to restrict rotation of the upper washer 29 or the lower washer 30 by engaging with the upper rim or lower rim of the arm pieces 23.

An internal thread portion 26b is formed vertically through the center of the threaded cylinder 26. A clamp bolt 31 is screwed to the internal thread portion 26b so that the vertical position of the clamp bolt 31 is adjustable. A head portion 31a is formed at the upper end of the clamp bolt 31. A hexagonal manipulation portion, which is an engaging hole 31b in this embodiment, is formed in the upper surface of the head portion 31a to be engaged with the distal end of a hexagonal wrench. A spherical portion 31c is formed at the lower end of the clamp bolt 31 and is engaged with a pad 32. The spherical portion 31c and the pad 32 are rotatable relative to each other. A third lock nut 33 is screwed to the outer circumference of the clamp bolt 31. The third lock nut 33 is securely tightened to the lower surface of the threaded cylinder 26 after the height of the clamp bolt 31 is adjusted so that the clamp bolt 31 is secured to the threaded cylinder 26.

In this embodiment, the guide groove 24 of the clamp arm 17, the first lock nut 27, the second lock nut 28, the upper washer 29, and the lower washer 30 constitute position adjusting means, which adjusts the clamp position of the threaded cylinder 26 and the clamp bolt 31.

Operation of the toggle clamp having the above structure will now be described.

As shown by a solid line in Fig. 1, when the manipulation levers 19 of the toggle mechanism 15 are rotated clockwise about the coupling pin 18, the toggle mechanism 15 is maintained inoperative. In this state, a workpiece W is placed at a predetermined position on the upper surface of the base bracket 11.

The clamp position is adjusted by moving the clamp bolt unit 25 horizontally along the guide groove 24 to match the position of the workpiece W with the first lock nut 27 loosened. After that, the first lock nut 27 is rotated in the tightening direction to secure the threaded cylinder 26 at the predetermined position of the clamp arm 17.

In this state, the height of the clamp bolt 31 is roughly adjusted by rotating the threaded cylinder 26 so that the pad 32 at the lower end of the clamp bolt 31 contacts the upper surface of the workpiece W. In this state, the manipulation levers 19 of the toggle mechanism 15 are rotated counterclockwise about the coupling pin 18 to press the clamp bolt 31 and the pad 32 against the upper surface of the workpiece W. Accordingly, the coupling pin 22A is located slightly on the right side of a dead line L, which connects the center of the coupling pin 18 and the center of the coupling pin 22B. Therefore, the workpiece W is clamped by a predetermined pressure. However, it is often the case that a desired pressure is not obtained by only rotating the toggle mechanism 15. Therefore, while the workpiece W is actually clamped, the distal end of the hexagonal wrench is engaged with the engaging hole 31b in the head portion 31a of the clamp bolt 31. When the hexagonal wrench is rotated, the clamp bolt 31 is rotated and the pressure is adjusted to an appropriate level.

The preferred embodiment has the following advantages.
(1) In the preferred embodiment, the threaded cylinder 26 is attached to the arm pieces 23 formed at the distal end of the clamp arm 17 so that the threaded cylinder 26 is horizontally adjustable along the guide groove 24. The clamp bolt 31 is screwed to the internal thread portion 26b formed at the center of the threaded cylinder 26 so that the clamp bolt 31 is vertically adjustable. Therefore, by engaging the hexagonal wrench with the engaging hole 31b in the head portion 31a of the clamp bolt 31 and rotating the hexagonal wrench while the workpiece W is clamped by the toggle mechanism 15 between the base bracket 11 and the pad 32, an operator is allowed to clamp the workpiece W with an appropriate pressure while perceiving the actual pressure with a hand. If a torque wrench is used instead of a normal hexagonal wrench to rotate the clamp bolt 31, the pressure is more accurately detected by a numerical value.
(2) In the preferred embodiment, the first lock nut 27 and the second lock nut 28 are screwed to the threaded cylinder 26, which is then moved in the guide groove 24. After that, the first lock nut 27 is tightened to secure the threaded cylinder 26. Therefore, the clamp position of the threaded cylinder 26 is easily adjusted with a simple structure.
(3) In the preferred embodiment, the pad 32 is provided at the outer end of the clamp bolt 31 via the spherical portion 31c. Therefore, when the clamp bolt 31 is rotated, the pad 32 does not rotate on the upper surface of the workpiece W. This prevents the upper surface of the workpiece W from being damaged.
(4) In the preferred embodiment, the second lock nut 28 is secured to the lower surface of the lower washer 30 by welding, and the rotation restricting rib 30a of the lower washer 30 is engaged with the lower rims of the arm pieces 23. Therefore, it is unnecessary to prevent rotation of the second lock nut 28 with, for example, fingers while rotating the threaded cylinder 26. This facilitates adjusting the height of the threaded cylinder 26.
(5) In the preferred embodiment, since the toggle mechanism 15 is used as the pressure applying mechanism, the pressure is easily applied to the workpiece W.

The preferred embodiment may be modified as follows.

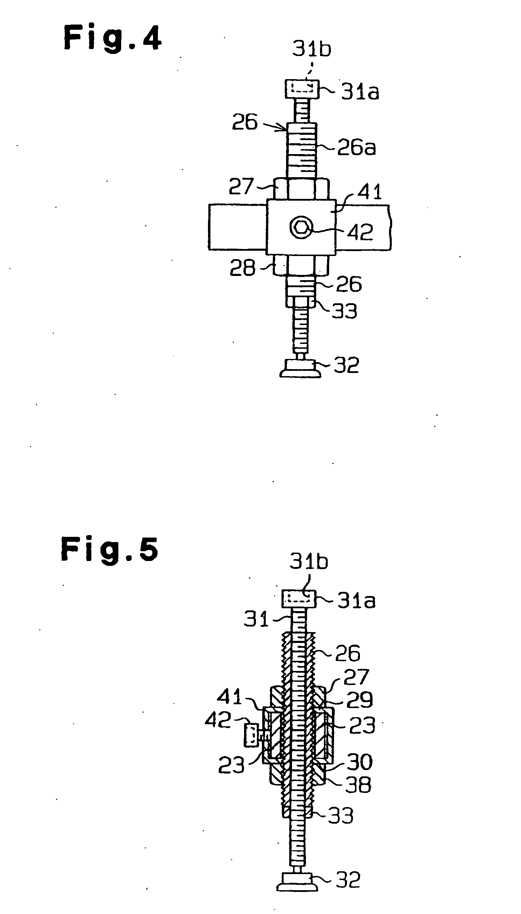

In a modified embodiment shown in Figs. 4 and 5, a tubular body 41 having a rectangular cross-section is fitted to the outer circumference of the arm pieces 23 to be slidable in the lateral direction. A bolt 42 is screwed to an internal thread portion formed in a side plate of the tubular body 41. The distal end of the bolt 42 is pressed against the side surface of one of the arm pieces 23 so that the tubular body 41 is secured to the side surface of the arm piece 23. The upper and lower plates of the tubular body 41 function as the upper and lower washers 29, 30. Other structures are the same as the preferred embodiment.

In this modified embodiment, the clamp position of the threaded cylinder 26 and the clamp bolt 31 is adjusted by reciprocating the tubular body 41 along the arm pieces 23 with the bolt 42 loosened. Then, the height of the threaded cylinder 26 is adjusted by loosening the first lock nut 27. Therefore, the height of the threaded cylinder 26 is adjusted in a stable manner. Other operations are the same as the preferred embodiment.

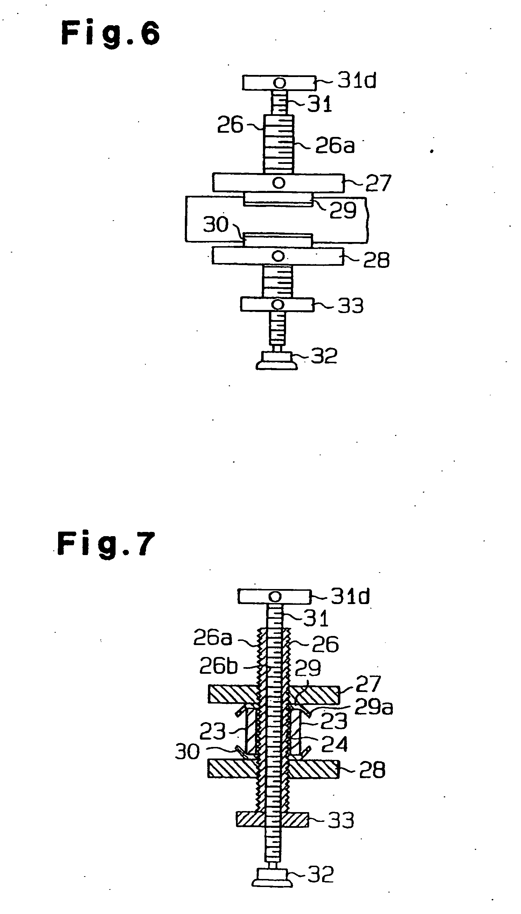

In a modified embodiment shown in Fig. 6 and 7, the shape of the two lock nuts 27, 28 of the preferred embodiment shown in Figs. 1 to 4 is changed to a disk-like form, and the diameter is increased as compared to that of the lock nuts of the preferred embodiment of Fig. 1. A knurl is formed on the outer circumferential surface of each lock nut to prevent slipping. Also, a manipulation knob 31d for rotational manipulation is integrally or separately formed on the upper end of the clamp bolt 31. Furthermore, the third lock nut 33 is also formed as a large diameter disk and a knurl is formed on its outer circumferential surface to enable manipulation of the third lock nut. The second lock nut 28 and the lower washer 30 are formed separately.

In this modified embodiment, the first lock nut 27, the second lock nut 28, the clamp bolt 31, and the third lock nut 33 are easily rotated.

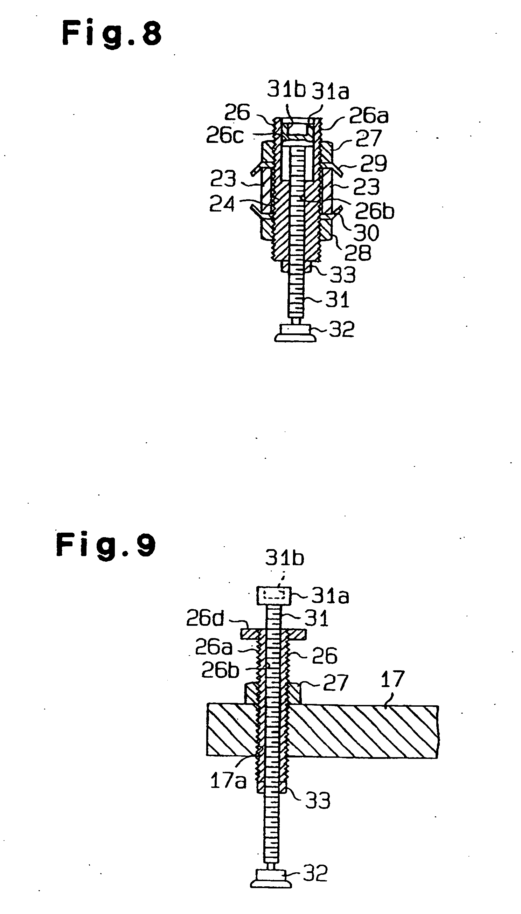

In a modified embodiment shown in Fig. 8, the internal thread portion 26b is formed at the lower section of the threaded cylinder 26 and a cylindrical accommodating bore 26c is formed at the upper section of the threaded cylinder 26. The head portion 31a formed at the upper portion of the clamp bolt 31 is accommodated in the accommodating bore 26c. In this modified embodiment, since the head portion 31a is not exposed outside the threaded cylinder 26, the appearance is simplified.

In the clamp shown in Fig. 9, the threaded cylinder 26 is screwed to an internal thread portion 17a formed at the distal end of the clamp arm 17. The first lock nut 27 is screwed to the external thread portion 26a of the threaded cylinder 26. A manipulation piece 26d is screwed to the upper end of the threaded cylinder 26 and is secured to the threaded cylinder 26 by welding. The threaded cylinder 26 and the manipulation piece 26d may be integrally formed with each other.

The clamping force is roughly adjusted by adjusting the height of the threaded cylinder 26 by rotating the manipulation piece 26d formed at the upper end of the threaded cylinder 26 with the first lock nut 27 loosened. The clamping force is then finely adjusted by rotating the clamp bolt 31 via the engaging hole 31b formed at the upper end of the clamp bolt 31 while the workpiece W is clamped.

In the preferred embodiment shown in Fig. 1 or the modified embodiments shown in Figs. 4 and 6, a rotational manipulation knob (not shown) may be formed at the upper end of the threaded cylinder 26. In this case, the height of the threaded cylinder 26 is easily adjusted.

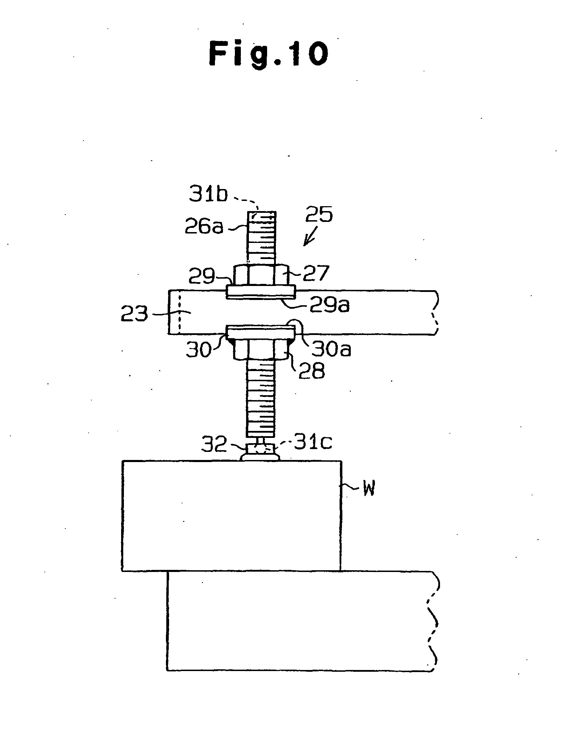

The clamp shown in Fig. 10 differs from the preferred embodiment of Fig. 1 in that a solid clamp bolt 26a is provided instead of a combination of the hollow threaded cylinder 26 and the small diameter clamp bolt 31. The pad 32 that is the same as the preferred embodiment is attached to the lower end of the clamp bolt 26a via the spherical portion 31c.

Also, the upper end of the clamp bolt 26a is located above the arm pieces 23. The hexagonal engaging hole 31b for being engaged with the distal end of the hexagonal wrench is formed in the upper end face of the clamp bolt 26. The engaging hole 31b functions as a manipulation portion.

Therefore, while the workpiece W is clamped by the toggle mechanism 15 between the base bracket 11 and the pad 32, the hexagonal wrench is engaged with the engaging hole 31b of the clamp bolt 26a and rotated. Thus, the workpiece W is clamped with an appropriate pressure while finely and easily adjusting the pressure of the clamp bolt 26a. Since a wide space above the clamp bolt 26a is used when adjusting the pressure, the operation is easily performed.

In addition to the above advantages, advantages are provided that are the same as the preferred embodiment of Fig. 1. Furthermore, the number of parts can be reduced to simplify the structure.

In the preferred embodiment, the second lock nut 28 and the lower washer 30 are coupled to each other. However, the second lock nut 28 and the lower washer 30 may be separated from each other.

Besides a workpiece that is processed by a machine tool, for example, a height detector may be a member to be clamped.

The pressure applying mechanism need not be formed by the toggle mechanism, but may be formed by a cam mechanism.

Instead of the base bracket 11, a support table for a workpiece for a machine tool may be used as the support member.

The clamping device may be used as a clamping jig for an assembly line or a welding operation of several types of products.

## Claims

1. A clamping apparatus comprising a support member (11) for supporting a member (W) to be clamped at a predetermined position, a mounting member (12) attached to the support member (11), a clamp arm (17) attached to the mounting member (12) to be able to reciprocate with respect to the mounting member (12), a pressure applying mechanism (15), which is located between the mounting member (12) and the clamp arm (17) and applies pressure to the clamp arm (17), and a clamp bolt (31), which is located on the clamp arm (17) and clamps the member (W) to be clamped between the clamp bolt (31) and the support member (11), a guide groove (24) formed in the clamp arm (17),
the clamping apparatus **being characterized in that,**
a threaded cylinder (26) having an external thread portion (26a) on the outside and an internal thread portion (26b) on the inside is attached to the clamp arm (17) such that the height of the threaded cylinder (26) is adjustable by utilizing the external thread portion (26a), the clamp bolt (31) is screwed to the internal thread portion (26b) of the threaded cylinder (26),
the threaded cylinder (26) containing the clamp bolt (31) is attached to the guide groove (24) such that the position of the threaded cylinder (26) is adjustable,
wherein when the threaded cylinder (26) is inserted in the guide groove (24), a first lock nut (27) and a second lock nut (28) are screwed to the external thread portion of the threaded cylinder (26) to sandwich the clamp arm (17) from above and below, and the threaded cylinder (26) is secured at a predetermined position of the clamp arm (17) by securely tightening the first lock nut (27) and the second lock nut (28) to the clamp arm (17),
wherein an upper washer (29) is located between the clamp arm (17) and the first lock nut (27) and a lower washer (30) is located between the clamp arm (17) and the second lock nut (28), the upper washer (29) and the lower washer (30) each have a rotation restricting rib (29a,30a), the rotation restricting ribs (29a, 30a) are engaged with the upper and lower rims (29a,30a) of the clamp arm (17) for restricting rotation of the upper washer (29) and the lower washer (30),
wherein the second lock nut (28) is fixed to the lower surface of the lower washer (30), and
wherein a manipulation portion (31b) is provided on the clamp bolt above the clamp arm (17), the manipulation portion (31b) being used for rotating the clamp bolt (31) within the threaded cylinder (26) in a state where the member (W) to be clamped is clamped between the clamp bolt (31) and the support member (11).

2. The clamping apparatus according to claim 1, wherein an engaging hole (31b) is formed at an upper end of the clamp bolt (31), the engaging hole (31b) being engageable with the distal end of a wrench for rotational manipulation.

3. The clamping apparatus according to claim 1, wherein the pressure applying mechanism is a toggle mechanism (15).

4. The clamping apparatus according to claim 1, wherein a pad (32) is located at the distal end of the clamp bolt (31), the pad (32) abuts against an upper surface of the member (W) to be clamped and permits the clamp bolt (31) to rotate relative to the pad (32).

## Patentansprüche

1. Eine Klemmvorrichtung, umfassend ein Haltebauteil (11) zum Halten eines Bauteils (W), welches in einer vorbestimmten Position zu klemmen ist, ein Befestigungsbauteil (12), welches an dem Haltebauteil (11) befestigt ist, einen Klemmarm (17), der an dem Befestigungsbauteil (12) befestigt ist, um sich relativ zu dem Befestigungsbauteil (12) hin- und herbewegen zu können, einen Druck-aufbringenden Mechanismus (15), welcher sich zwischen dem Befestigungsbauteil (12) und dem Klemmarm (17) befindet, und Druck auf den Klemmarm (17) aufbringt, und einen Klemmbolzen (31), welcher sich auf dem Klemmarm (17) befindet, und das Bauteil (W) klemmt, welches zwischen dem Klemmbolzen (31) und dem Haltebauteil (11) zu klemmen ist, eine Führungsnut (24), die in dem Klemmarm (17) gebildet ist, wobei die Klemmvorrichtung **gekennzeichnet ist durch** einen Gewindezylinder (26) mit einem äußeren Gewindeabschnitt (26a) auf der Außenseite, und einem inneren Gewindeabschnitt (26b) auf der Innenseite, der so auf dem Klemmarm (17) befestigt ist, dass die Höhe des Gewindezylinders (26) einstellbar ist unter Verwendung des äußeren Gewindeabschnitts (26a), wobei der Klemmbolzen (31) auf den inneren Gewindeabschnitt (26b) des Gewindezylinders (26) geschraubt ist,
den Gewindezylinder (26), der den Klemmbolzen (31) beinhaltet, und an der Führungsnut (24) so befestigt ist, dass die Position des Gewindezylinders (26) einstellbar ist, wobei, wenn der Gewindezylinder (26) in die Führungsnut (24) eingefügt ist, eine erste Sperrmutter (27) und eine zweite Sperrmutter (28) auf den äußeren Gewindeabschnitt des Gewindezylinders (26) geschraubt sind, um den Klemmarm (17) von oben und unten einzuklemmen, und wobei der Gewindezylinder (26) in einer vorbestimmten Position des Klemmarms (17) gesichert ist **durch** festes Anziehen der ersten Sperrmutter (27) und der zweiten Sperrmutter (28) an den Klemmarm (17),
wobei eine obere Scheibe (29) zwischen dem Klemmarm (17) und der ersten Sperrmutter (27) angeordnet ist, und eine untere Scheibe (30) zwischen dem Klemmarm (17) und der zweiten Sperrmutter (28) angeordnet ist, wobei die obere Scheibe (29) und die untere Scheibe (30) jeweils eine rotationsbegrenzende Rippe (29a, 30a) aufweisen, wobei die rotationsbegrenzenden Rippen (29a, 30a) in die oberen und unteren Rippen (29a, 30a) des Klemmarms (17) eingreifen, um eine Rotation der oberen Scheibe (29) und der unteren Scheibe (30) zu begrenzen, wobei die zweite Sperrmutter (28) an der unteren Oberfläche der unteren Scheibe (30) befestigt ist, und
wobei ein Manipulationsabschnitt (31b) auf dem Klemmbolzen über dem Klemmarm (17) bereitgestellt ist, wobei der Manipulationsabschnitt (31b) zum Drehen des Klemmbolzens (31) innerhalb des Gewindezylinders (26) in einem Zustand verwendet wird, in dem das Bauteil (W), welches zu klemmen ist, zwischen dem Klemmbolzen (31) und dem Haltebauteil (11) geklemmt ist.

2. Klemmvorrichtung nach Anspruch 1, wobei ein Eingriffsloch (31b) an einem oberen Ende des Klemmbolzens (31) gebildet ist, wobei das Eingriffsloch (31b) in das distale Ende eines Winders für eine Drehmanipulation eingreifen kann.

3. Klemmvorrichtung nach Anspruch 1, wobei der Druckaufbringende Mechanismus ein Kniehebelmechanismus (15) ist.

4. Klemmvorrichtung nach Anspruch 1, wobei ein Polster (32) an dem distalen Ende des Klemmbolzens (31) angeordnet ist, wobei das Polster (32) gegen eine obere Oberfläche des zu klemmenden Bauteils (W) anstößt, und dem Klemmbolzen (31) ermöglicht, sich relativ zu dem Polster (32) zu drehen.

## Revendications

1. Un appareil de serrage comprenant un élément support (11) pour supporter un élément (W) à serrer dans une position prédéterminée, un élément de montage (12) fixé à l'élément support (11, un bras de serrage (17) fixé à l'élément de montage (12) et apte à effectuer un mouvement alternatif par rapport à l'élément de montage (12), un mécanisme d'application de pression (15) qui est disposé entre l'élément de montage (12) et le bras de serrage (17) et qui applique une pression sur le bras de serrage (17), et un boulon de serrage (31) qui est disposé sur le bras de serrage (17) et qui serre l'élément (W) à serrer entre le boulon de serrage (31) et l'élément support (11), une rainure de guidage (24) étant ménagée dans le bras de serrage (17), l'appareil de serrage étant **caractérisé en ce qu'**un cylindre fileté (26) pourvu, à l'extérieur, d'une portion extérieure filetée (26a) et, à l'intérieur, une portion intérieure filetée (26b) est fixé au bras de serrage (17), de façon que la hauteur du cylindre fileté (26) soit réglable en utilisant la portion extérieure filetée (26a), le boulon de serrage (31) étant vissé dans la portion intérieure filetée (26b) du cylindre fileté (26), **en ce que** le cylindre fileté (26) contenant le boulon de serrage (31) est fixé à la rainure de guidage (24), de sorte que la position du cylindre fileté (26) est réglable, appareil de serrage dans lequel, lorsque le cylindre fileté (26) est inséré dans la rainure de guidage (24), un premier écrou de blocage (27) et un second écrou de blocage (28) sont vissés dans la portion extérieure filetée du cylindre fileté (26) pour enserrer le bras de serrage (17) par-dessus et par-dessous, et le cylindre fileté (26) est fixé dans une position prédéterminée du bras de serrage (17) en serrant à fond le premier écrou de blocage (27) et le second écrou de blocage (28) sur le bras de serrage (17), dans lequel une rondelle supérieure (29) est disposée entre le bras de serrage (17) et le premier écrou de blocage (27), et une rondelle inférieure (30) est disposée entre le bras de serrage (17) et le second écrou de blocage (28), la rondelle supérieure (29) et la rondelle inférieure (30) possédant chacune une nervure de limitation de rotation (29a, 30a), les nervures de limitation de rotation (29a, 30a) coopérant avec les bords inférieur et supérieur (29a, 30a) du bras de serrage (17) pour limiter la rotation de la rondelle supérieure (29) et de la rondelle inférieure (30), dans lequel le second écrou de blocage (28) est fixé à la surface inférieure de la rondelle inférieure (30) et dans lequel une portion de manipulation (31b) est prévue sur le boulon de serrage au-dessus du bras de serrage (17), la portion de manipulation (31b) servant à tourner le boulon de serrage (31) à l'intérieur du cylindre fileté (26) dans un état où l'élément (W) à serrer est serré entre le boulon de serrage (31) et l'élément support (11).

2. L'appareil de serrage selon la revendication 1, dans lequel un trou d'insertion (31b) est ménagé dans l'extrémité supérieure du boulon de serrage (31), le trou d'insertion (31b) pouvant recevoir l'extrémité distale d'une clé de manipulation en rotation.

3. L'appareil de serrage selon la revendication 1, dans lequel le mécanisme d'application de pression est un mécanisme à bascule (15).

4. L'appareil de serrage selon la revendication 1, dans lequel un embout (32) est disposé à l'extrémité distale du boulon de serrage (31), l'embout (32) étant appliqué contre une surface supérieure de l'élément (W) à serrer et permettant au boulon de serrage (31) de tourner par rapport à l'embout (32).
